# EUROPEAN PATENT APPLICATION

(11) **EP 1 898 570 A1**
(43) Date of publication of application: **12.03.2008**
(21) Application number: 07002483.1
(22) Date of filing: 06.02.2007
(51) Int. Cl.: H04L 12/56

(54) **Member notification method for mobile terminals using short-range wireless communication**

(30) Priority: 08.09.2006 KR 20060087079
(71) Applicant: Samsung Electronics Co., Ltd., Suwon-si, Gyeonggi-Do (KR)
(72) Inventor: Lee, Yong Seok, Gyeonggi-do (KR)
(74) Representative: Boakes, Jason Carrington

(57) **Abstract**

A member notification method is disclosed for mobile terminals capable of short-range wireless communication. The member notification method includes forming a particular group of a first mobile terminal and one or more second mobile terminals; discovering, by the first mobile terminal, a second mobile terminal in a fixed-radius range using short-range wireless communication; and notifying, when the second mobile terminal is discovered, by the first mobile terminal, a user of the first mobile terminal of the presence of the discovered second mobile terminal. The group may accommodate mobile terminals that are different in design model and in serving mobile communication network. Member mobile terminals can discover one another, and their users can discover one another in crowded places without communication costs. The RuBee or ZigBee technology permits mobile terminals to operate at most times, enabling ready discovery of members at a close distance.

## Description

### BACKGROUND OF THE INVENTION

### 1. Field of the Invention

The present invention relates generally to a mobile terminal and, in particular, to a member notification method for mobile terminals that have a capability of short-range wireless communication, wherein a member mobile terminal can discover another member mobile terminal through short-range wireless communication and notify users of the presence of the discovered mobile terminal.

### 2. Description of the Related Art

In view of rapid advances in communication technologies, a terminal user in motion can transmit and receive a voice call at most times and places. In addition to this voice communication service, an advanced mobile terminal supports various functions related to text and image transmission, Moving Pictures Expert Groups (MPEG) audio layer 3 (MP3) file playing, gaming and the like.

Users may desire to form a distinctive group to, for example, strengthen a partnership or friendship between group members. In a service known as a couple phone service, one member of a group can make a call or transmit a text message to another member of the group at a reduced charge rate.

However, in order to use a conventional couple phone service, group members must subscribe to an identical mobile network operator, and pay charges for calls and messages between members although at reduced rates. Further, the conventional couple phone service is not helpful to a member in discovery of another member at a close distance.

### SUMMARY OF THE INVENTION

The present invention has been made in view of the above problems, and an object of the present invention is to provide a member notification method for mobile terminals that have a capability of short-range wireless communication, wherein users carrying different types of mobile terminals can form a group.

Another object of the present invention is to provide a member notification method for mobile terminals, wherein mobile terminals can form a group without the intervention of a mobile network operator.

Still another object of the present invention is to provide a member notification method for mobile terminals, wherein a member mobile terminal can readily discover another member mobile terminal at a close distance.

In accordance with an aspect of the present invention, there is provided a member notification method for mobile terminals that have a capability of short-range wireless communication, including discovering, by a first mobile terminal, a second mobile terminal in a fixed-radius range using short-range wireless communication, wherein the first mobile terminal and second mobile terminal are members of a single group; and notifying, when the second mobile terminal is discovered, by the first mobile terminal, a user of the first mobile terminal of the presence of the discovered second mobile terminal.

Preferably, the short-range wireless communication is based upon RuBee or ZigBee technology.

The member notification method may further include notifying, by the discovered second mobile terminal, a user of the second mobile terminal of the presence of the first mobile terminal. Preferably, the users of the first and second mobile terminals are notified using one of a preset song or bell sound, vibration, and flash. The step of notifying by the first mobile terminal may further include displaying group information on a display unit of the first terminal, and the step of notifying by the second mobile terminal may further include displaying the group information on a display unit of the second mobile terminal.

In accordance with another aspect of the present invention, there is provided a member notification method for mobile terminals that have a capability of short-range wireless communication, including forming a group of a first mobile terminal and at least one second mobile terminal; discovering, by the first mobile terminal, one of the second mobile terminals in a fixed-radius range using short-range wireless communication; and notifying, when the second mobile terminal is discovered, by the first mobile terminal, a user of the first mobile terminal of the presence of the discovered second mobile terminal.

The forming a group step may include establishing, by the first mobile terminal, a short-range wireless connection to a second mobile terminal that is to be a member; making a group of the first mobile terminal and the second mobile terminal connected to the first mobile terminal; and setting user notification means to be used in the notifying steps.

The making a group step may include determining, by the first mobile terminal, the type of the group and transmitting a group forming request to the connected second mobile terminal; and accepting, by the connected second mobile terminal, the group forming request and joining the group.

Preferably, the type of the group is one of a one-to-one type, one-to-many type, and many-to-many type. The one-to-one group has one first mobile terminal and one second mobile terminal as members, and permits the first mobile terminal to make a short-range wireless connection only to the single second mobile terminal using a password setting feature. The one-to-many group has one first mobile terminal and a plurality of second mobile terminals as members, and permits the first mobile terminal to make a short-range wireless connection to any second mobile terminal. The many-to-many group has one first mobile terminal and a plurality of second mobile terminals as members, permits the first mobile terminal to make a short-range wireless connection to any second mobile terminal, and also permits one of the second mobile terminals to make a short-range wireless connection to another second mobile terminal.

Alternatively, the forming a group step may include making, by the first mobile terminal, a group; transmitting, by the first mobile terminal, to a second mobile terminal that is to be a member, a group forming request containing data on the group and a registration key for short-range wireless communication; accepting, by the second mobile terminal that is to be a member, the group forming request and registering the group data and registration key; and setting user notification means to be used in the notifying steps. In the transmitting step, the group forming request may be transmitted to the second mobile terminal to be a member through a short message service provided by a mobile communication network.

### BRIEF DESCRIPTION OF THE DRAWINGS

The above and other objects, features and advantages of the present invention will be more apparent from the following detailed description in conjunction with the accompanying drawings, in which:
FIG. 1 illustrates a member notification system capable of using a member notification method of the present invention;
FIG. 2 is a block diagram illustrating a configuration of a mobile terminal having a capability of short-range wireless communication in the system of FIG. 1;
FIG. 3 is a flow chart illustrating a member notification method according to the present invention;
FIG. 4 is a sequence diagram illustrating a group-forming procedure in the method of FIG. 3 using short-range wireless communication;
FIG. 5 is a flow chart illustrating a group-type selecting step in the procedure of FIG. 4;
FIG. 6 is a sequence diagram illustrating a password setting procedure after selection of a one-to-one group; and
FIG. 7 is a sequence diagram illustrating a group-forming procedure in the method of FIG. 3 through a mobile communication network.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Detailed descriptions of constructions or processes known in the art may be omitted to avoid obscuring the invention in unnecessary detail.

In the following description, a 'first' mobile terminal denotes a mobile terminal acting as a coordinator in a group, and a 'second' mobile terminal denotes a mobile terminal other than a first mobile terminal. A 'first user' denotes a user of a first mobile terminal, and a 'second user' denotes a user of a second mobile terminal. Second mobile terminals may also form a group.

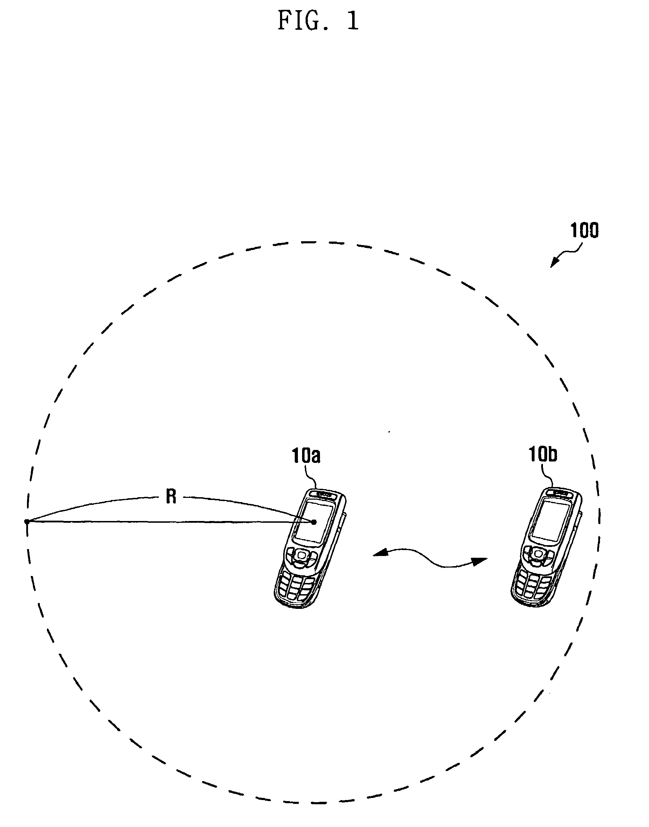

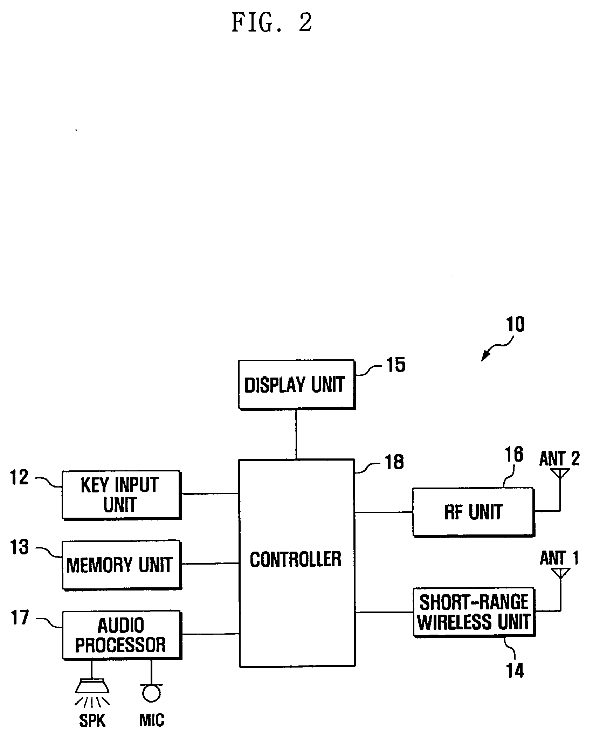

FIG. 1 illustrates a member notification system according to the present invention. FIG. 2 is a block diagram illustrating a configuration of a mobile terminal in the system of FIG. 1.

Referring to FIG. 1, the member notification system 100 includes a first mobile terminal 10a and a second mobile terminal 10b. The first mobile terminal 10a and the second mobile terminal 10b each have short-range wireless communication capability, and are members of an identical group.

The short-range wireless communication may be based upon RuBee, ZigBee, Bluetooth, infrared, ultra wideband (UWB), or Near Field Communication (NFC) technology. However, the RuBee or ZigBee technology is preferred for the first mobile terminal 10a and second mobile terminal 10b. A RuBee or ZigBee enabled device is small, and can be easily installed in the first mobile terminal 10a and the second mobile terminal 10b. In addition, the RuBee or ZigBee enabled device consumes low power, and can be operational at most times for short-range wireless communication.

RuBee denotes a bi-directional protocol based on the Institute of Electrical and Electronics Engineers (IEEE) 1902.1 standard, and operates at frequencies below 450 kHz (optimally at a low frequency band of 132 kHz). RuBee has a transmission range of 15m in radius and supports a data rate of about 100 Kbps, and RuBee waves can pass through water and ground. ZigBee denotes communication protocols based on the IEEE 802.15.4 standard, and operates in the Industrial, Scientific and Medical (ISM) radio bands of 868 MHz, 915 MHz, and 2.4 GHz. ZigBee has a transmission range of 10 to 20m in radius and supports a data rate of 20 to 250 Kbps.

Referring to FIG. 2, the first mobile terminal 10a includes a key input unit 12, a memory unit 13, a short-range wireless unit 14, a display unit 15, a radio frequency (RF) unit 16, an audio processor 17, and a controller 18. Because the first mobile terminal 10a and the second mobile terminal 10b have an identical configuration, the following description is focused on the first mobile terminal 10a.

The key input unit 12 includes a plurality of keys for controlling operations of the first mobile terminal 10a and for short-range wireless communication, and transmits to the controller 18 user commands corresponding to input of keys selected by the first user. The input user commands include commands related to settings and operations of the member notification function and short-range wireless communication.

The memory unit 13 stores programs necessary for the operation of the first mobile terminal 10a, and data resulting from the control operation of the controller 18 or from utilization of the first mobile terminal 10a. In particular, the memory unit 13 stores setting data for the member notification function, such as group formation data, registration key for a short-range wireless connection, and user notification means of the first mobile terminal 10a.

The short-range wireless unit 14 communicates with the second mobile terminal 10b through a short-range wireless connection established according to selected communication standards. The short-range wireless unit 14 exchanges control signals for member notification with the second mobile terminal 10b. The short-range wireless unit 14 periodically inquires about the second mobile terminal 10b in the short-range communication range using an antenna ANT1. If a second mobile terminal 10b is discovered, the short-range wireless unit 14 transmits information on the discovered second mobile terminal 10b to the controller 18, and also transmits a control signal from the second mobile terminal 10b to the controller 18.

The display unit 15 displays various menus and data stored in the memory unit 13 on a screen, and may include Liquid Crystal Display (LCD) devices. In particular, the display unit 15 displays visual images related to group formation and member notification according to selection of keys of the key input unit 12.

The Radio Frequency (RF) unit 16 modulates data from the controller 18 into a signal to be transmitted, upconverts the frequency of the modulated signal, and transmits the upconverted signal via an antenna ANT2. The RF unit 16 receives a signal via the antenna ANT2, downconverts the frequency of the received signal, demodulates the downconverted signal into an information signal, and transmits the information signal to the controller 18. The received signal may carry an incoming call.

The audio processor 17 converts an audio signal from a microphone MIC into a digital signal under the control of the controller 18, and outputs audio information from the RF unit 16 through a speaker SPK. In particular, when a member mobile terminal is discovered by the short-range wireless unit 14, the audio processor 17 outputs one of a preset song and bell sound through the SPK.

The controller 18 controls the overall operation of the first mobile terminal 10a. In particular, the controller 18 controls setting of the member notification function and operations related thereto. That is, the controller 18 registers in advance at least one second mobile terminal 10b as a member. Thereafter, the controller 18 receives information on other mobile terminals in the short-range communication range from the short-range wireless unit 14, and checks whether a member mobile terminal is present in the range on the basis of the received terminal information. If a member mobile terminal is present in the range, the controller 18 activates the first mobile terminal 10a to inform the first user that a member mobile terminal is at a close distance, by outputting one of a preset song or bell sound, vibration, and turning a flash on and off.

Although not shown in FIG. 2, the first mobile terminal 10a includes a vibrator for producing vibration and a flash turned on or off, under the control of the controller 18. The vibrator and the flash notify the first user.

Although, in the above description, mobile communication terminals are used as the first and second mobile terminals 10a and 10b, notebook computers, personal digital assistants, and portable multimedia players may also be used as the first and second mobile terminals 10a and 10b.

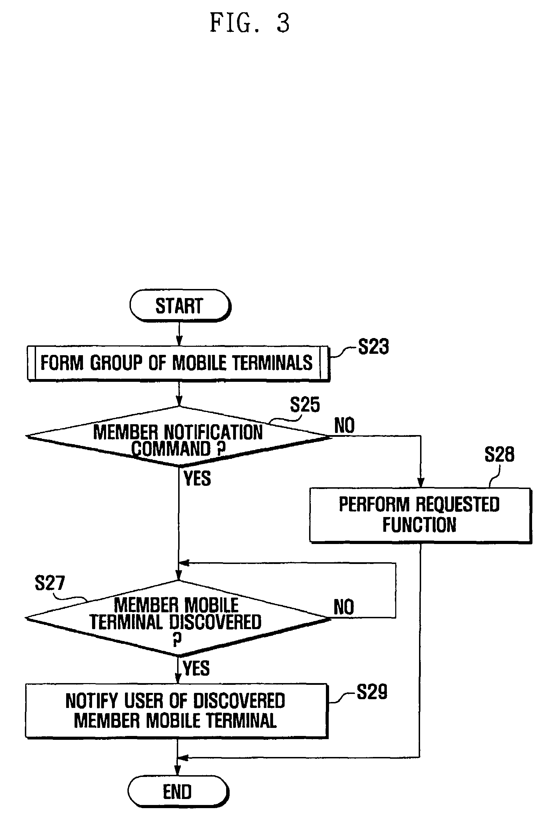

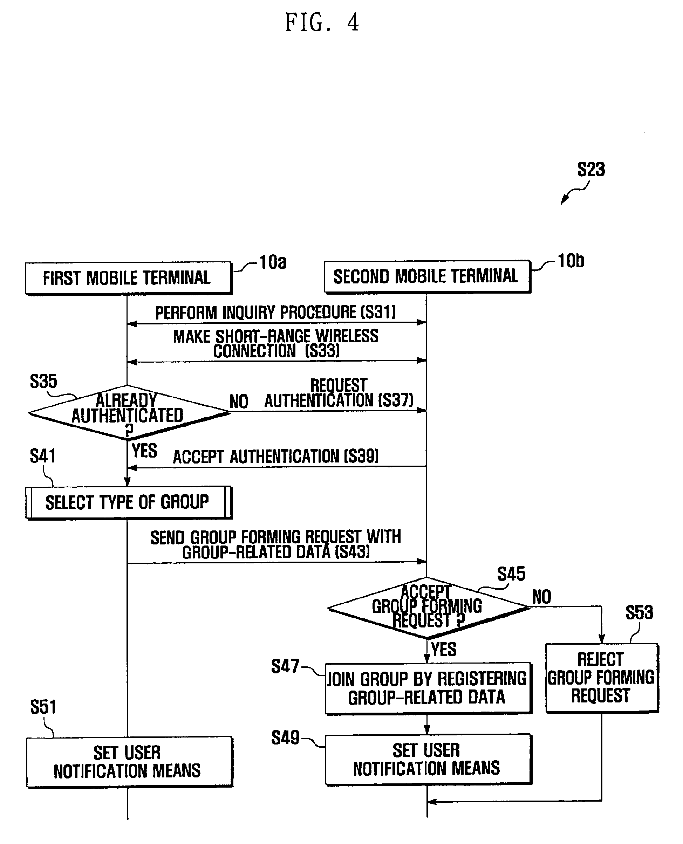

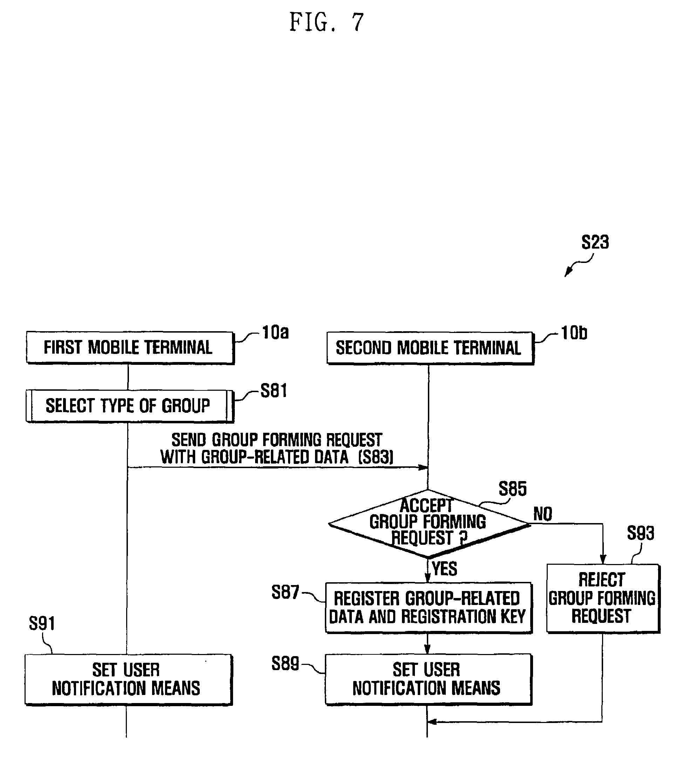

FIG. 3 is a flow chart illustrating a member notification method according to the present invention. Referring to FIGS. 1 to 3, the member notification method is described as follows. When the first user inputs a command of group formation, the controller 18 of the first mobile terminal 10a performs a group forming procedure at Step S23. In the group forming procedure, the first mobile terminal 10a registers a second mobile terminal 10b to be a member to form a group. The group forming procedure may be performed through one of a short-range wireless communication (illustrated in FIG. 4) and through a mobile communication network (illustrated in FIG. 7).

The controller 18 determines whether a command input from the key input unit 12 is a member notification command at Step S25.

If an input command is a member notification command, the controller 18 inquires about a second mobile terminal 10b in the short-range communication range at predetermined time intervals using short-range wireless communication at Step S27. If a second mobile terminal 10b is discovered, the controller 18 of the first mobile terminal 10a informs the first user that the second mobile terminal 10b is present at a close distance, by outputting one of a preset song or bell sound, vibration and turning the flash on and off at Step S29. The second mobile terminal 10b may also inform the second user of discovery of the first mobile terminal 10a. Further, the first mobile terminal 10a and second mobile terminal 10b may display the group information on their display units 15.

If an input command is not a member notification command at Step S25, the controller 18 performs a function associated with the input command at Step S28.

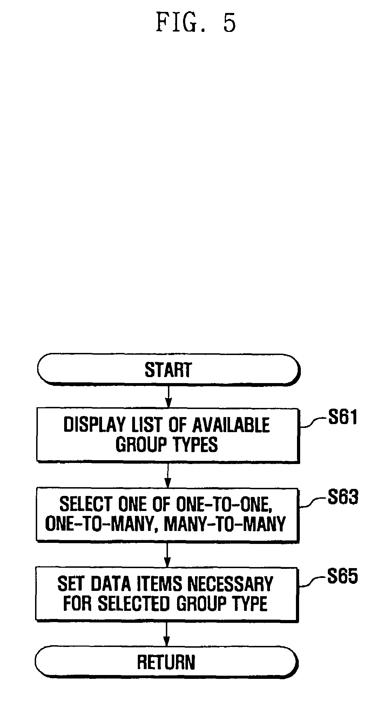

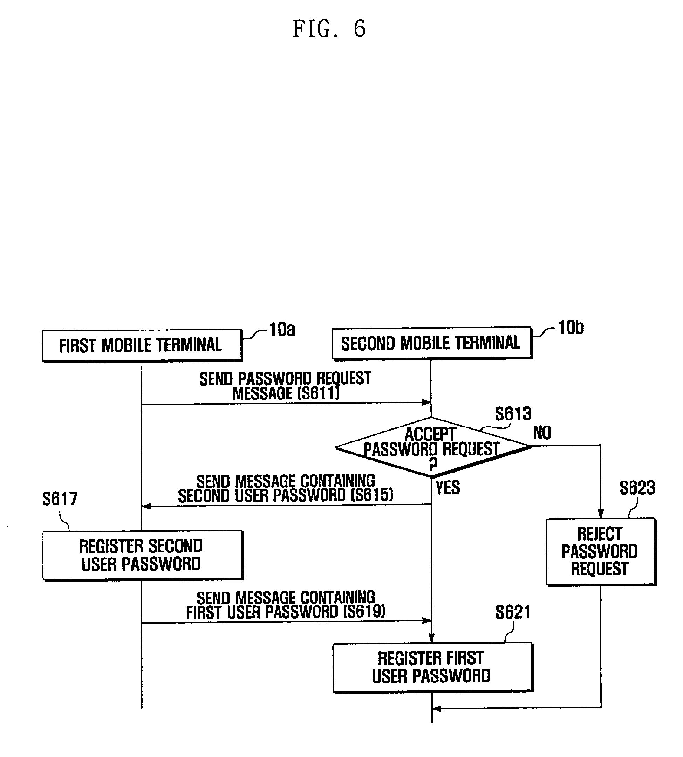

FIG. 4 illustrates a group-forming procedure (Step S23 in FIG. 3) using short-range wireless communication; FIG. 5 illustrates group-type selection (Step S41 in FIG. 4); and FIG. 6 illustrates a password setting procedure after selection of a one-to-one group. Referring to FIGS. 1 to 6, the group-forming procedure using short-range wireless communication is described as follows.

Referring to FIG. 4, the first mobile terminal 10a performs an inquiry procedure to discover a second mobile terminal 10b to be a member in the short-range communication range using short-range wireless communication at Step S31. When a second mobile terminal 10b is discovered, the first mobile terminal 10a makes a short-range wireless connection to the discovered second mobile terminal 10b at Step S33. The first mobile terminal 10a determines whether the second mobile terminal 10b is already authenticated at Step S35. If the second mobile terminal 10b is already authenticated, the first mobile terminal 10a omits an authentication procedure.

If the second mobile terminal 10b is not authenticated, the first mobile terminal 10a transmits an authentication request containing a registration key for authentication to the second mobile terminal 10b through the short-range wireless connection at Step S37. The second mobile terminal 10b accepts the authentication request by registering the registration key in the authentication request, and transmits an authentication accept reply to the first mobile terminal 10a at Step S39. The second mobile terminal 10b may also reject the authentication request.

Thereafter, when the first user selects the type of a group to be formed at step S41, the first mobile terminal 10a requests the second mobile terminal 10b to join the group by transmitting a group forming request containing group-related data at Step S43. The second mobile terminal 10b displays the received group-related data on the display unit 15, and requests the second user to decide whether to accept the group forming request at Step S45. If the second user decides to accept the group forming request, the second mobile terminal 10b registers the group-related data at Step S47. The second user may also decide to reject the group forming request at Step S53.

The second mobile terminal 10b sets a user notification means such as output of one of a shared song or bell sound, vibration, and turning the flash on and off at Step S49. The first mobile terminal 10a also sets a user notification means, preferably, identical to that of the second mobile terminal 10b at step S51.

Referring to FIG. 5, group-type selection (Step S41 in FIG. 4) is described as follows. The first mobile terminal 10a displays a list of available group types (namely, one-to-one, one-to-many and many-to-many group types) at Step S61.

A single first mobile terminal 10a and a single second mobile terminal 10b can form a one-to-one group, which is suitable for intimate partners or friends.

A single first mobile terminal 10a and multiple second mobile terminals 10b can form a one-to-many group, wherein associations between the second mobile terminals 10b are absent. The one-to-many group is suitable for intimate persons such as friends, colleagues, and schoolmates.

A single first mobile terminal 10a and multiple second mobile terminals 10b can form a many-to-many group, wherein associations between the second mobile terminals 10b may be present. The many-to-many group is suitable for community club members.

Returning to FIG. 5, the first user selects a group type from the list at Step S63, and the first mobile terminal 10a initializes default or user-selected data items necessary for creating and maintaining a group of the selected type at Step S65.

In the case when the one-to-one group is selected, a password setting procedure as illustrated in FIG. 6 can be further performed for protecting privacy between the first mobile terminal 10a and the second mobile terminal 10b.

Referring to FIG. 6, the first mobile terminal 10a transmits a password request to the second mobile terminal 10b at Step S611. The second mobile terminal 10b requests the second user to decide whether to accept the password request at Step S613. If the second user decides to accept the password request, the second mobile terminal 10b transmits a password reply containing a password input by the second user to the first mobile terminal 10a at Step S615. A password may be, for example, one of a string of alphanumeric characters and a fingerprint. The first mobile terminal 10a registers the password input by the second user in the received reply at StepS617, and transmits a message containing a password input by the first user to the second mobile terminal 10b at Step S619. The second mobile terminal 10b registers the password input by the first user in the message from the first mobile terminal 10a at Step S621. If the second user decides not to accept the password request at Step S613, the second mobile terminal 10b rejects the password request at Step S623.

At step S611, if the first mobile terminal 10a transmits a password request having a password input by the first user to the second mobile terminal 10b, Step S619 can be omitted.

FIG. 7 is a sequence diagram illustrating a group-forming procedure (Step S23 in FIG. 3) through a mobile communication network.

The first user decides the type of a group to be formed by selecting one of one-to-one, one-to-many and many-to-many group types at Step S81.

The first mobile terminal 10a requests the second mobile terminal 10b to join the group by transmitting a group forming request containing group-related data and a registration key for short-range wireless communication at Step S83. The group forming request may be transmitted using a Short Message Service (SMS) provided by a mobile communication network. If the second mobile terminal 10b is previously authenticated, the first mobile terminal 10a does not have to transmit the registration key.

The second mobile terminal 10b displays received group-related data on the display unit 15, and requests the second user to decide whether to accept the group forming request at Step S85. If the second user decides to accept the group forming request, the second mobile terminal 10b registers the group-related data and registration key at Step S87. The second user may also decide to reject the group forming request at Step S93.

The second mobile terminal 10b sets a user notification means at step S89. The first mobile terminal 10a also sets a user notification means at step S91.

As is apparent from the above description, the present invention provides a member notification method for mobile terminals that have a capability of short-range wireless communication. Users carrying mobile terminals, that are different in design model and in serving mobile communication network, can form a special group using short-range wireless communication or a mobile communication network. Member mobile terminals can discover one another using short-range wireless communication, and notify their users so that the users can discover one another in crowded places without communication costs. The RuBee or ZigBee technology permits mobile terminals to operate at most times for short-range wireless communication, enabling ready discovery of members at a close distance. One-to-one, one-to-many, and many-to-many groups can be formed depending upon associations between members.

While preferred embodiments of the present invention have been shown and described in this specification, it will be understood by those skilled in the art that various changes or modifications of the embodiments are possible without departing from the spirit and scope of the invention as defined by the appended claims. For example, a first mobile terminal and a second mobile terminal may perform text data transmission or one-way voice signal transmission using short-range wireless communication after notifying users of the presence of a member mobile terminal at a close distance.

## Claims

1. A member notification method for mobile terminals capable of short-range wireless communication, comprising:
discovering, by a first mobile terminal, a second mobile terminal range using short-range wireless communication, wherein the first mobile terminal and the second mobile terminal are members of a single group; and
notifying, when the second mobile terminal is discovered, by the first mobile terminal, a user of the first mobile terminal of the presence of the second mobile terminal.

2. The member notification method of claim 1, wherein the short-range wireless communication is based upon one of RuBee and ZigBee technology.

3. The member notification method of claim 1, further comprising notifying, by the second mobile terminal, a user of the second mobile terminal of the presence of the first mobile terminal.

4. The member notification method of claim 3, wherein the user of the first mobile terminal is notified using one of a preset song or bell sound, vibration and flash, and wherein the user of the second mobile terminal is notified using one of a preset song or bell sound, vibration and flash.

5. The member notification method of claim 4, wherein the step of notifying by the first mobile terminal further comprises displaying group information on a display unit of the first terminal, and wherein the step of notifying by the second mobile terminal further comprises displaying the group information on a display unit of the second mobile terminal.

6. A member notification method for mobile terminals capable of short-range wireless communication, comprising:
forming a group of a first mobile terminal and at least one second mobile terminal;
discovering, by the first mobile terminal, at least one second mobile terminal using short-range wireless communication; and
notifying, when a second mobile terminal is discovered, by the first mobile terminal, a user of the first mobile terminal of the presence of the second mobile terminal.

7. The member notification method of claim 6, further comprising notifying, by the second mobile terminal, a user of the second mobile terminal of the presence of the first mobile terminal.

8. The member notification method of claim 7, wherein the forming a group step comprises:
establishing, by the first mobile terminal, a short-range wireless connection to a second mobile terminal that is to be a member;
making a group of the first mobile terminal and the second mobile terminal connected to the first mobile terminal; and
setting user notification means to be used in the notifying steps.

9. The member notification method of claim 8, wherein the making a group step comprises:
determining, by the first mobile terminal, a type of the group and transmitting a group forming request to the connected second mobile terminal; and
accepting, by the connected second mobile terminal, the group forming request and joining the group.

10. The member notification method of claim 9, wherein the type of the group is one of a one-to-one type, one-to-many type, and many-to-many type.

11. The member notification method of claim 10, wherein the one-to-one group has one first mobile terminal and one second mobile terminal as members, and permits the first mobile terminal to make a short-range wireless connection only to the one second mobile terminal using a password setting feature.

12. The member notification method of claim 10, wherein the one-to-many group has one first mobile terminal and a plurality of second mobile terminals as members, and permits the first mobile terminal to make a short-range wireless connection to any second mobile terminal.

13. The member notification method of claim 10, wherein the many-to-many group has one first mobile terminal and a plurality of second mobile terminals as members, permits the first mobile terminal to make a short-range wireless connection to any second mobile terminal, and also permits one of the second mobile terminals to make a short-range wireless connection to another second mobile terminal.

14. The member notification method of claim 8, wherein the user notification means includes one of a preset song or bell sound, vibration, and flash.

15. The member notification method of claim 14, wherein the step of notifying further comprises displaying group information on a display unit of the first terminal, and wherein the step of notifying further comprises displaying the group information on a display unit of the second mobile terminal.

16. The member notification method of claim 7, wherein the forming a group step comprises:
making, by the first mobile terminal, a group;
transmitting, by the first mobile terminal, to a second mobile terminal that is to be a member, a group forming request containing data on the group and a registration key for short-range wireless communication;
accepting, by the second mobile terminal that is to be a member, the group forming request and registering the group data and registration key; and
setting user notification means to be used in the notifying steps.

17. The member notification method of claim 16, wherein the group forming request is transmitted to the second mobile terminal that is to be a member through a short message service provided by a mobile communication network.

18. The member notification method of claim 6, wherein the short-range wireless communication is based upon one of RuBee andZigBee technology.
